# EUROPEAN PATENT SPECIFICATION

(11) **EP 3 394 005 B1**
(45) Date of publication and mention of the grant of the patent: **22.07.2020**
(21) Application number: 16838076.4
(22) Date of filing: 22.12.2016
(51) Int. Cl.: C04B 37/04, C04B 37/00, C04B 33/34

(54) **A METHOD FOR FIXING A PART ON THE SURFACE OF A CERAMIC SANITARY WARE AND A CERAMIC SANITARY WARE ON WHICH SAID PART IS FIXED**
VERFAHREN ZUR BEFESTIGUNG EINES TEILS AN DER OBERFLÄCHE EINER SANITÄRKERAMIK UND SANITÄRKERAMIK MIT DARAUF BEFESTIGTEM TEIL
PROCÉDÉ DE FIXATION D'UNE PIÈCE SUR LA SURFACE D'UN APPAREIL SANITAIRE EN CÉRAMIQUE ET APPAREILS SANITAIRES EN CÉRAMIQUE SUR LESQUELS EST FIXÉE LADITE PIÈCE

(30) Priority: 26.12.2015 TR 201516994
(43) Date of publication of application: 31.10.2018
(73) Proprietor: Eczacibabasi Holding Anonim Sirketi, Levent/Istanbul (TR)
(72) Inventor: SARIGÖL, SüIeyman Vedat, 11300 Bozüyük/Bilecik (TR); BALTACI, Nihat, 11300 Bozüyük/Bilecik (TR); ÇAKICI, Ali Kamer, 11300 Bozüyük/Bilecik (TR); HOCAOGLU, Recep, 11300 Bozüyük/Bilecik (TR)
(74) Representative: Petraz, Gilberto Luigi
(86) International application number: PCT/TR2016/000196
(87) International publication number: WO 2017/111735

(56) References cited:
- CN-U- 203 033 900
- JP-B2- 2 880 137
- US-A1- 2001 030 509

## Description

### Subject of the Invention

The invention concerns a method for fixing a part on the surface of a ceramic sanitary ware and a ceramic sanitary ware comprising said part.

### State of the Art

The use of the ceramic sanitary ware is involved generally on the wet floors and on the surfaces in contact with water. Moreover, it is extremely important that the hygienic use of such products is ensured taking into account their places of use. In line this with this purpose, the members providing a hygienic environment via radiation, various sensors for measuring the pollution level or for measuring the changes in the ambient values or the illumination members for providing a better appearance in aesthetical terms are occasionally positioned on the surface of the ceramic sanitary ware. It is necessary to fix such products on the ceramic sanitary ware in such a way that their contact with the water is prevented. According to the state of the art, the part to be positioned on the ceramic sanitary ware may be fixed on the product via mechanical methods or by way of adhering the same on the ceramic sanitary ware. In these known methods, the problems such as the falling of the part positioned on the ceramic sanitary ware down from the surface of the product as a result of chemical or physical wear or the inability to provide the required sealing in case of the product being used on wet floor are encountered. Further, the dirt may accumulate in the mounting region between the part mounted on the ceramic sanitary ware and the ceramic sanitary ware.

With the method developed within the scope of the invention, the part to be fixed on the ceramic sanitary ware is enabled to be secured in a robust manner, and at the same time, the dirt accumulation is prevented in the region between the ceramic surface and the part as a result of the fixing of said part in a manner without leaving any gap between said part and the ceramic surface.

CN 203 033 900 U discloses a method of decoration a ceramic tile with a 3D figure. US 2001/030509 A1 discloses a method of manufacturing a ceramic hollow tube with a translucent part used for electrodeless lamp. JP 2 880137 B2 discloses a method for manufacturing a ceramic body with translucent inlays.

### Object of the Invention

The object of the invention is to develop a method for fixing and integrating, on the surface of a ceramic sanitary ware, for instance a part featuring the light transmittance and/or a part enabling an image on the background to be seen by the user and/or a part that will enclose in a housing a member being used for illumination purposes on the ceramic sanitary ware and/or a part that will be able to fix any electronic member on the product in such a way that it will not contact the liquid, wherein said method allows the fixation and integration to be performed both in a robust manner and in a manner that allows the hygienic use, and also develop a product obtained via this method.

### References:

**1:** Part
**2:** Ceramic sanitary ware/toilet bowl
**3a:** Hole with narrow diameter
**3b:** Stepped hole
**4:** Housing
**5:** Glazing layer
**5a:** Portion of the glazing layer that forms during the firing process
**6:** Water
**7:** Toilet bowl

### Description of the Figures

**Figure 1****:** View showing the hole with narrow diameter on the ceramic surface, not forming part of the invention
**Figure 2****:** View of the part to be fixed on the ceramic surface in a state positioned on the hole with narrow diameter on the ceramic sanitary ware prior to the glazing of the ceramic surface, not forming part of the invention
**Figure 3****:** Sectional view of the part to be fixed on the ceramic surface in a state positioned on the hole with narrow diameter on the ceramic sanitary ware prior to the glazing of the ceramic surface, not forming part of the invention
**Figure 4****:** Front sectional view of the surface of the ceramic sanitary ware, on which the part has been positioned, in a state where said surface has been glazed and the firing process has been completed for the same, not forming part of the invention
**Figure 5****:** Top perspective sectional view of the surface of the ceramic sanitary ware, on which the part has been positioned, in a state where said surface has been glazed and the firing process has been completed for the same, not forming part of the invention
**Figure 6****:** View of the surface of the ceramic sanitary ware in a glazed state prior to the positioning of the part, which is to be fixed on the surface of the ceramic sanitary ware, on the hole with narrow diameter on said surface, not forming part of the invention
**Figure 7****:** View of the part to be fixed on the surface of the ceramic sanitary ware in a state positioned on the hole with narrow diameter on the glazed surface of the ceramic sanitary ware, not forming part of the invention
**Figure 8****:** View of the post-firing state of the surface of the ceramic sanitary ware where said surface has been glazed and the part to be fixed on the surface of the ceramic sanitary ware has been subsequently positioned on said surface, not forming part of the invention
**Figure 9****:** View of the stepped hole on the surface of the ceramic sanitary ware
**Figure 10****:** Sectional view of the stepped hole on the surface of the ceramic sanitary ware
**Figure 11****:** View of the part to be fixed on the surface of the ceramic sanitary ware in a state positioned in the stepped hole on the surface of the ceramic sanitary ware prior to the glazing of the ceramic sanitary ware
**Figure 12****:** Front sectional view of the part to be fixed on the surface of the ceramic sanitary ware in a state positioned in the stepped hole on the surface of the ceramic sanitary ware prior to the glazing of the ceramic sanitary ware
**Figure 13****:** Top perspective sectional view of the part to be fixed on the surface of the ceramic sanitary ware in a state positioned in the stepped hole on the surface of the ceramic sanitary ware prior to the glazing of the ceramic sanitary ware
**Figure 14****:** Top perspective sectional view of the surface of the ceramic sanitary ware in a state where the part to be fixed on the surface of the ceramic sanitary ware has been positioned in the stepped hole on said surface and the glazing and the firing processes have been completed for said surface
**Figure 15****:** Front sectional view of the surface of the ceramic sanitary ware in a state where the part to be fixed on the surface of the ceramic sanitary ware has been positioned in the stepped hole on said surface and the glazing and the firing processes have been completed for said surface
**Figure 16****:** View of the surface of the ceramic sanitary ware in a glazed state without the part to be fixed on the surface of the ceramic sanitary ware being positioned in the stepped hole on said surface
**Figure 17****:** View of the part to be fixed on the surface of the ceramic sanitary ware in a state positioned in the stepped hole on the glazed surface of the ceramic sanitary ware
**Figure 18****:** View of the post-firing state of the surface of the ceramic sanitary ware where said surface has been glazed and the part to be fixed on the surface of the ceramic sanitary ware has been subsequently positioned in the stepped hole on said surface
**Figure 19a****:** Perspective sectional view of the part in a state positioned on the surface of the toilet bowl
**Figure 19b****:** Side sectional view and detailed views through AA-BB of the part in a state positioned on the surface of the toilet bowl
**Figure 19c****:** Top view of the parts in a state positioned on the surface of the toilet bowl

### Detailed Description of the Invention

The invention concerns a method for fixing a part on the surface of a ceramic sanitary ware and a ceramic sanitary ware comprising said part.

The method according to the invention is a method able to be employed for fixing, on the surface of a ceramic sanitary ware, any part able to be used for different purposes in the product, for instance, a part enabling a transparent surface to be obtained and/or a part featuring the light transmittance and/or a part that will enclose in a housing and thus protect any electronic member, in order to enable said member to be maintained on the surface of the ceramic sanitary ware without experiencing damage, and the ceramic sanitary ware comprising said part is also included in the scope of the invention.

Said ceramic sanitary ware may be a toilet bowl, washbasin, urinal, shower tray or bidet. The embodiment in which a part is fixed on the toilet bowl, an example of a ceramic sanitary ware, via the method developed within scope of the invention will be described below as an example.

The subject of the invention encompasses a method for fixing a part on the surface of a ceramic sanitary ware and a ceramic sanitary ware comprising a part that is fixed thereon via said method.

Said part positioned on the toilet bowl may be any part featuring the light transmittance and/or any part featuring the ability to allow any image on the background to be seen by the user and/or any part that is just required to be securely fitted to the product without necessarily bringing any particular feature to the product and that enables to enclose in a housing any member positioned in the rear section of said part.

While said part may be a part manufactured from the glass or ceramic or composite material, or a synthetic crystal part, it may not be limited to these.

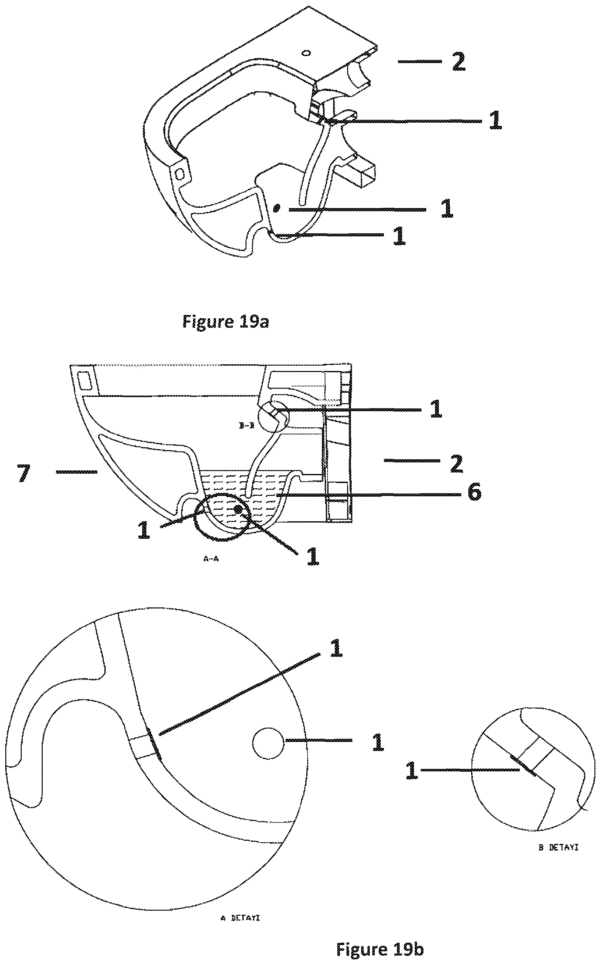

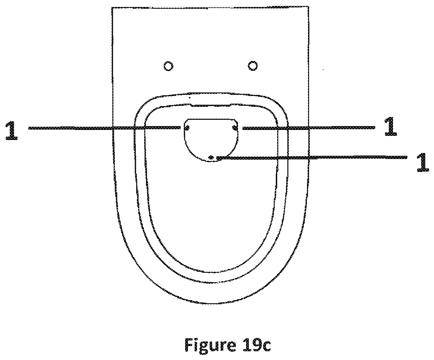

Said part may for instance be used in order to fix a sensor in the toilet bowl. In another embodiment, it may be a part used for fixing a member that emits UV rays for hygienic use in the toilet bowl. Owing to the method according to the invention, it becomes possible to fix said members on the toilet bowl surface in such a way that they will not contact the water. Figures 19a and 19b show the fixing of the part (1) on the toilet bowl. During the firing process for the toilet bowl, said any electronic or non-electronic member may be fixed in the rear section of the part (1) that is fixed in the toilet bowl (7). Since the sealing is provided in such a way that the water (6) within the toilet bowl (7) will not be able to contact, it will be possible to dispose any kind of equipment in the toilet bowl for hygienic use as well as other needs. As can be seen in the figures, four parts (1) are positioned on the toilet bowl surface according to the preferred embodiment. However, the number of parts may not be limited in this manner. In particular, it will be possible via the method according to the invention to fix any desired number of parts (1) in a mutually facing arrangement or at any desired position within the toilet bowl (7) or in any region near the surface, in a manner independent of the region where said parts are positioned, in order to secure on the surface the members performing the functions such as the provision of hygiene by way of transmission of rays and the detection of pollution.

The manufacturing method for the ceramic sanitary ware usually comprises the process of mortar preparation, shaping via casting, drying, glazing and firing. In the method according to the invention, the ceramic sanitary ware is subjected to kiln application/firing along with the part with the above-mentioned properties positioned on the surface of said ceramic sanitary ware prior to the glazing process for the surface or following the glazing process for the surface, before said ceramic sanitary ware is fired, and said part is enabled to be fixed on the surface of the ceramic sanitary ware by means of the glazing layer that melts and crystallizes during the firing process.

While it is possible to make the holes, in which said part is to be positioned, on the surface of the ceramic sanitary ware after said ceramic sanitary ware has left the mould, it is also possible to remove the product from the mould with the holes for positioning said part already made thereon.

While the positioning of the part (1), which is to be fixed on the surface of the ceramic sanitary ware, on or in a hole on the surface of the ceramic sanitary ware (2) via the method developed within the scope of the invention will be described below, it is also possible to fix said part on the surface of the ceramic sanitary ware without making any hole on the surface of the ceramic sanitary ware, owing to the method according to the invention. The method according to the invention relates to the fixation of the part on the surface of the ceramic sanitary ware during the process of firing said ceramic sanitary ware.

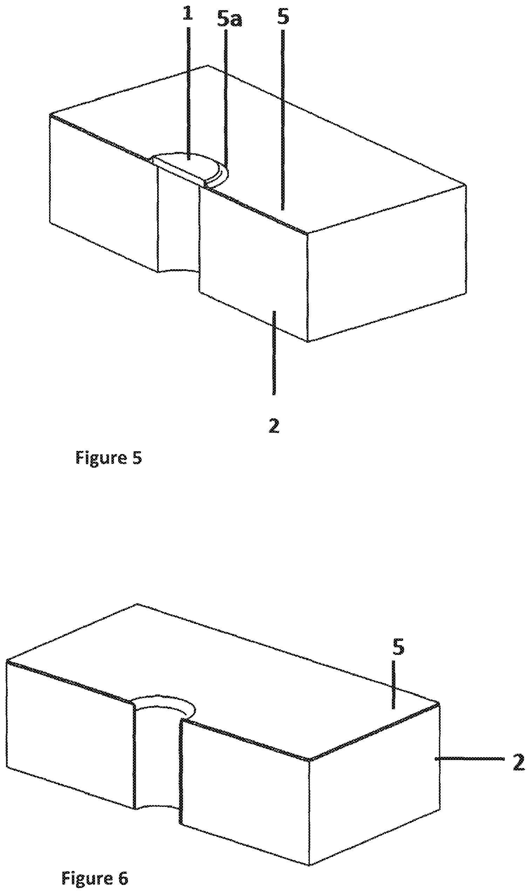

Two different embodiments of the method developed within the scope of the invention and the product obtained via said method will be described below. In one embodiment, not forming part of the invention, the part (1) to be fixed on the surface of the ceramic sanitary ware is positioned on at least one hole with narrow diameter (3a) made on the ceramic sanitary ware (2), whilst in the other embodiment of the invention, the part (1) to be fixed on the surface of the ceramic sanitary ware is positioned in at least one stepped hole (3b) made on the ceramic sanitary ware (2). In the method according to the invention, the part (1) to be fixed on the surface of the ceramic sanitary ware is positioned in the stepped hole (3b) made on the ceramic sanitary ware prior to or following the glazing process for the surface of the ceramic sanitary ware, before the firing process for the ceramic sanitary ware. The ceramic sanitary ware (2) is fired in a kiln along with the part (1) to be fixed on the surface of the same. Upon the melting and crystallization of the glazing, which has been previously applied on the surface of the ceramic sanitary ware, during the firing, the glazing layer formed between the part (1) to be fixed on the surface of the ceramic sanitary ware and the surface of the ceramic sanitary ware (2), i.e. the portion (5a) of the glazing layer that forms during the firing process, enables the part (1) positioned on the surface of the ceramic sanitary ware to be fixed on the ceramic surface and a perfect transition to be formed between the part and the surface of the ceramic sanitary ware. The glazing layer (5) covers the surface of the ceramic sanitary ware (2) in the form of a thin layer as a result of the firing process. The portion (5a) of the glazing layer that forms during the firing process as a result of the process of firing together the ceramic sanitary ware (2), the surface of which has been glazed, and the part (1) to be fixed on the surface of the ceramic sanitary ware forms, as can be seen in Figures 5, 8, 14 and 18, a transition between the part (1) to be fixed on the surface of the ceramic sanitary ware and the surface of the ceramic sanitary ware (2) in such a way that no gap will remain, and accordingly, the dirt accumulation is prevented and the sealing is enabled between the part (1) positioned on the surface of the ceramic sanitary ware and the ceramic surface and the part (1) positioned on the surface of the ceramic sanitary ware is secured on the ceramic sanitary ware (2) in such a way that it will not come loose. The portion (5a) of the glazing layer that forms during the firing process also forms a bond between the glazing layer (5) applied on the surface of the ceramic sanitary ware and the glass part (1).

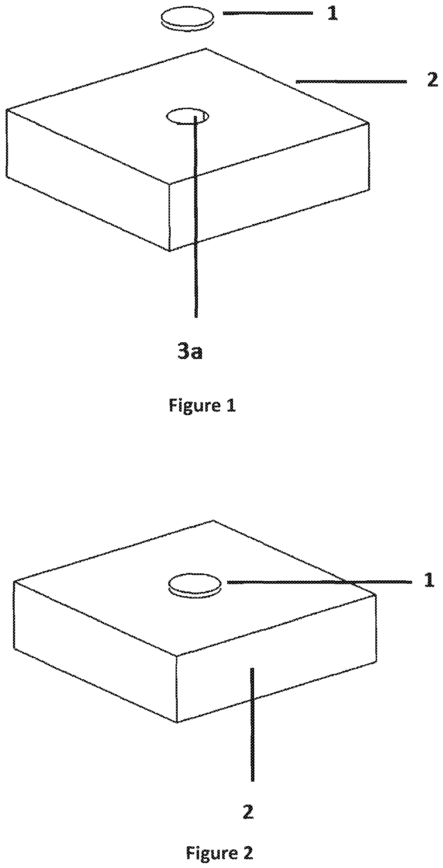

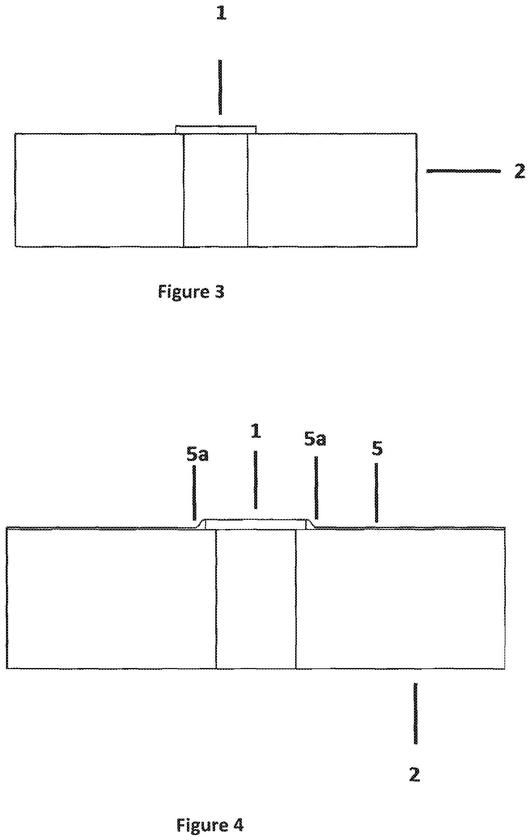

In the first embodiment of the method and the product not comprised in the scope of the invention, the part (1) to be fixed on the surface of the ceramic sanitary ware is positioned on the hole (3a) with narrow diameter made on the surface of the ceramic sanitary ware (2). Said hole (3a) with narrow diameter is given this name as its diameter is smaller than the diameter of the part (1) to be fixed on the surface of the ceramic sanitary ware, and as can be seen in Figures 2 and 3, the part (1) to be fixed on the surface of the ceramic sanitary ware is positioned on the hole (3a) with narrow diameter on the ceramic sanitary ware in such a way that it will be seated on the surface of the ceramic sanitary ware (2). The surface of the ceramic sanitary ware (2) is glazed after the positioning of the part (1) on the same or before the positioning of the part (1) on the same. The firing process is carried out for the ceramic sanitary ware (2) with completed glazing process, along with the part (1) on the same. During the firing process, the glazing layer (5) covers the surface of the ceramic sanitary ware (2) in the form of a thin layer as seen in Figures 4, 5 and 8, and upon the formation of the portion (5a) of the glazing layer that forms during the firing process as seen in Figures 4, 5 and 8, a transition/bond is formed by said glazing layer between the part (1) positioned on the surface of the ceramic sanitary ware and the surface of the ceramic sanitary ware (2), and the part (1) is enabled to be adhered/fixed on the surface of the ceramic sanitary ware (2). The portion (5a) of the glazing layer that forms during the firing process also forms a bond between the glazing layer (5) applied on the surface of the ceramic sanitary ware and the glass part (1). Figures 1 through 3 show the positioning of the part (1), which is to be fixed on the surface of the ceramic sanitary ware, on the ceramic sanitary ware before the surface of the ceramic sanitary ware is glazed. Figures 4 and 5 show the portion (5a) of the glazing layer that forms during the firing process, which contacts the part (1) on the hole (3a) with narrow diameter after said firing process; in other words, these two figures show the bond formed between the part (1) on the surface of the ceramic sanitary ware and the surface of the ceramic sanitary ware (2). Owing to this bond formed between the part (1) to be fixed on the surface of the ceramic sanitary ware and the surface of the ceramic sanitary ware (2), i.e. owing to the portion (5a) of the glazing layer that forms during the firing process, no gap remains between the part (1) positioned on the surface of the ceramic sanitary ware and the surface of the ceramic sanitary ware (2), and thus, the accumulation of dirt is prevented in this region. The portion (5a) of the glazing layer that forms during the firing process also forms a bond between the glazing layer (5) applied on the surface of the ceramic sanitary ware and the glass part (1).

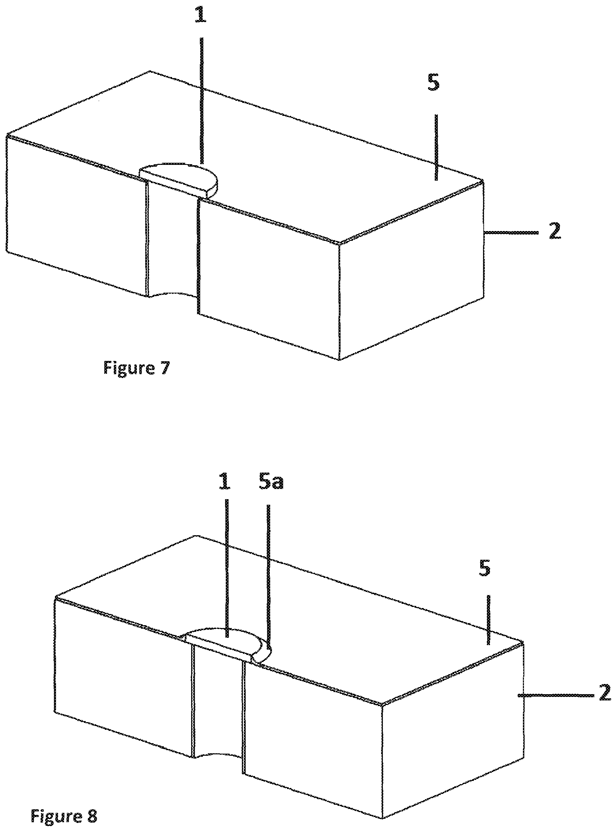

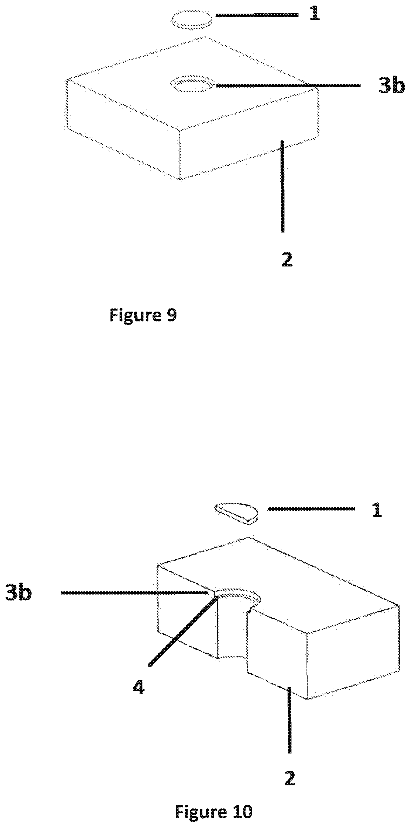

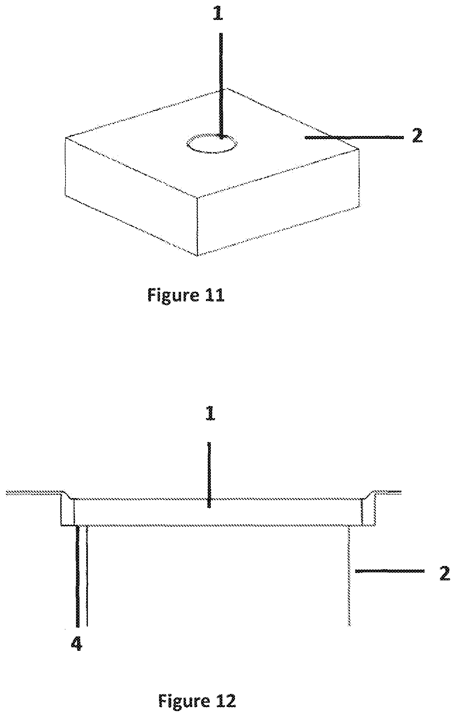

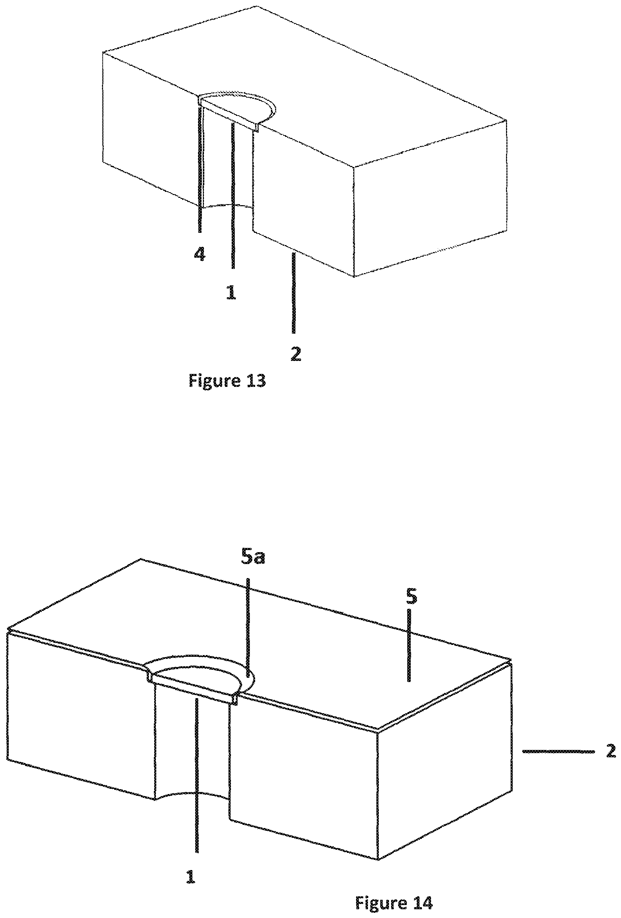

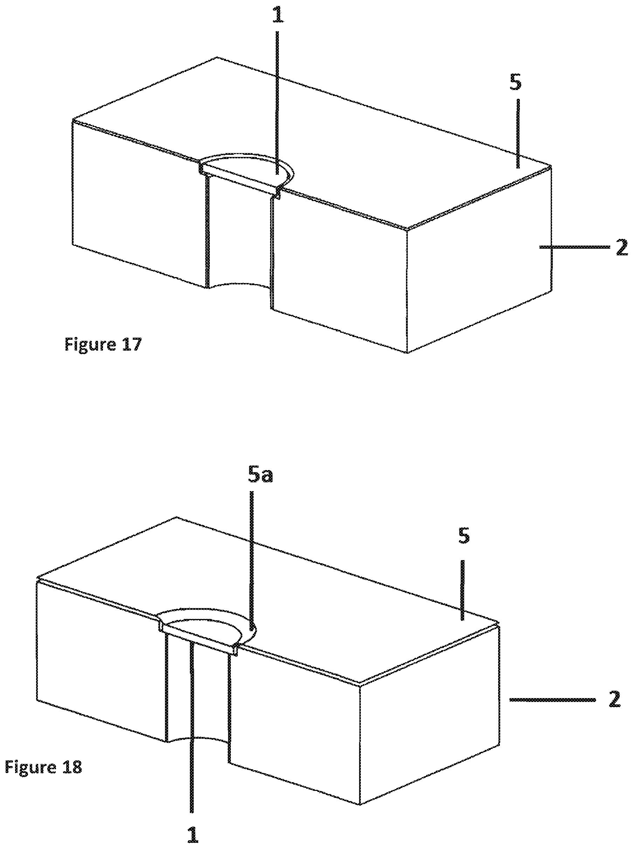

Figures 6-8 show the glazing of the ceramic sanitary ware (2) prior to positioning of the part (1) on the same, and then the positioning of the part (1) on the ceramic sanitary ware, according to the first embodiment of the invention. In Figure 6, the glazed ceramic sanitary ware (2), without the part (1) on the same, and also the glazing layer (5) on the ceramic sanitary ware can be seen. In Figure 8, the bond formed by the glazing layer (5) between the surface of the ceramic sanitary ware (2) and the part (1) following the process of firing together the ceramic sanitary ware (2) and the part (1) to be fixed on the surface of the ceramic sanitary ware can be seen. This bond is intended to mean the portion (5a) of the glazing layer that forms during the firing process, which is in contact with the part (1), and it can be seen in Figure 8. As mentioned above, this portion forms a transition between the part (1) to be fixed on the surface of the ceramic sanitary ware and the surface of the ceramic sanitary ware (2) and enables the part (1) to be fixed on the surface of the ceramic sanitary ware (2). At the same time, since no gap remains owing to said portion between the part (1) and the surface of the ceramic sanitary ware (2), the accumulation of dirt is also precluded in this portion. The portion (5a) of the glazing layer that forms during the firing process also forms a bond between the glazing layer (5) applied on the surface of the ceramic sanitary ware and the glass part (1).
An embodiment of the invention is shown in Figures 9-18. This embodiment of the method developed within the scope of the invention involves the positioning of the part (1), which is to be fixed on the surface of the ceramic sanitary ware, in a stepped hole (3b) made on the ceramic sanitary ware (2). In Figures 9, 10 and 16, the stepped hole (3b) made on the ceramic sanitary ware (2) can be seen. The stepped hole (3b) contains a housing (4) in the form of a cavity on which the part (1) is to be positioned, and therefore, it is referred to as the stepped hole. The part (1) is seated on the housing (4) inside the stepped hole (3b) (Figure 13, Figure 15 and Figure 17). In this embodiment, the part (1) to be fixed on the surface of the ceramic sanitary ware is positioned in the housing (4) inside the stepped hole (3b) in such a way that it will be entirely located inside the stepped hole (3b), i.e. in such a way that it will not extend beyond the interior of the stepped hole (3b). Unlike the first embodiment, the part (1) to be fixed on the surface of the ceramic sanitary ware is not seated on the surface of the ceramic sanitary ware (2), but is positioned in the stepped hole (3b) (Figure 13 and Figure 17). After the positioning of the part (1) in the stepped hole (3b) on the ceramic sanitary ware or prior to the positioning of the part (1) in the stepped hole (3b) on the ceramic sanitary ware, the glazing layer is applied on the surface of the ceramic sanitary ware (2), and then, the kiln application/firing process is carried out for the ceramic sanitary ware along with the part (1) positioned on the same. The glazing, which melts and then crystallizes during the firing process, covers the surface of the ceramic sanitary ware (2) in the form of a thin layer (Figures 14 and 18). In Figures 14, 15 and 18, the portion (5a) of the glazing layer that forms during the firing process, which is in contact with the part (1), can be seen. This portion (5a) enables the part (1) to be fixed on the surface of the ceramic sanitary ware (2) and it may also be defined as the bond formed between the part (1) and the surface of the ceramic sanitary ware (2). The glazing layer forms a transition between the part (1) and the surface of the ceramic sanitary ware (2) and enables the part (1) to be secured in the stepped hole (3b). The portion (5a) of the glazing layer that forms during the firing process also forms a bond between the glazing layer (5) applied on the surface of the ceramic sanitary ware and the glass part (1).

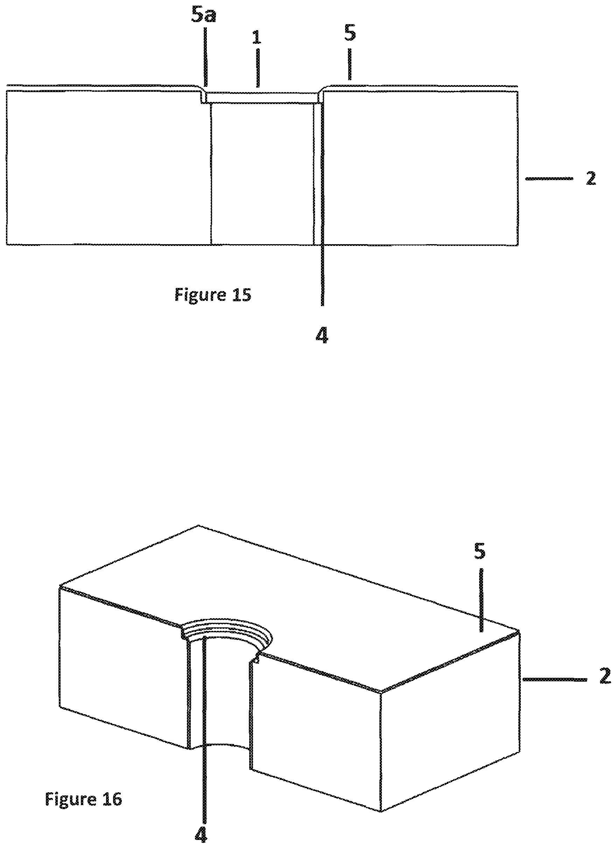

Figures 9-15 show the glazing of the ceramic sanitary ware (2) after the part (1) to be fixed on the surface of the ceramic sanitary ware has been positioned on the ceramic sanitary ware and the portion (5a) of the glazing layer that forms during the process of firing the ceramic sanitary ware (2) together with the part (1) on the same, which firing process is performed after the glazing process, according to the second embodiment of the invention. The portion (5a) of the glazing layer that forms during the firing process forms a transition between the surface of the ceramic sanitary ware (2) and the part (1) and it can be seen in Figures 14 and 15. The portion (5a) of the glazing layer that forms during the firing process also forms a bond between the glazing layer (5) applied on the surface of the ceramic sanitary ware and the part (1). Figures 16-18 show the glazing of the surface of the ceramic sanitary ware (2) before the part (1) is positioned on the ceramic sanitary ware (2), followed by the positioning of the part (1) on the ceramic sanitary ware (2). Subsequently, the ceramic sanitary ware (2) and the part (1) are together subjected to kiln application/firing. Figure 16 shows the glazing layer (5) on the ceramic sanitary ware (2) in a state in which the part (1) is not present on the ceramic sanitary ware (2). In Figure 18, the portion (5a) of the glazing layer that forms during the firing process can be seen. Said portion (5a) forms a transition between the part (1) and the surface of the ceramic sanitary ware (2) and enables the part (1) to be fixed on the surface of the ceramic sanitary ware (2). At the same time, since no gap remains owing to said portion between the part (1) and the surface of the ceramic sanitary ware (2), the accumulation of dirt is also precluded in this portion. The portion (5a) of the glazing layer that forms during the firing process also forms a bond between the glazing layer (5) applied on the surface of the ceramic sanitary ware and the part (1).
In the method according to the invention, the part (1) to be fixed on the surface of the ceramic sanitary ware may be positioned in said stepped hole (3b) on the surface of the ceramic sanitary ware as mentioned above, prior to as well as after the glazing process for the surface of the ceramic sanitary ware. In either embodiment, the surface of the part (1) to be fixed on the surface of the ceramic sanitary ware is not glazed and only the surface of the ceramic sanitary ware (2) is glazed. However, in case the part (1) to be fixed on the surface of the ceramic sanitary ware is positioned on the surface of the ceramic sanitary ware prior to the glazing process, the surface of the part must be covered or masked so that the glazing will not contact the part (1) while the glazing process is in progress. In the first embodiment not forming part of the invention in which the part (1) is positioned on the hole (3a) with narrow diameter, the care must be taken to ensure that the points at which the part (1) contacts the surface of the ceramic sanitary ware are glazed. The glazing layer (5) contacts only the edges of the part (1) to be fixed on the surface of the ceramic sanitary ware and does not cover the surface of the part (1). The portion (5a) of the glazing layer that forms during the firing process can be seen in Figure 4, Figure 5 and Figure 8. Owing to the formation of this portion (5a) upon the melting and crystallization of the glazing layer while the ceramic sanitary ware (2) is being subjected to firing process, the part (1) is fixed on the ceramic sanitary ware (2). Figures 14, 15 and 18 show the portion (5a) of the glazing layer that forms during the firing process according to the second embodiment of the invention. As in the first embodiment, the glazing layer (5) covers the surface of the ceramic sanitary ware in the form of a thin layer and the surface of the part (1) is not covered by the glazing layer. The portion (5a) of the glazing layer that forms during the firing process forms upon the melting and crystallization of the glazing during the firing process and forms a transition/bond between the surface of the ceramic sanitary ware (2) and the part (1) and enables the part (1) to be positioned in a secure manner on the surface of the ceramic sanitary ware (2).

In case the part (1) is positioned on the ceramic sanitary ware (2) before the surface of the ceramic sanitary ware (2) is subjected to the glazing process in the method developed within the scope of the invention, the part (1) sinks in the ceramic by a certain extent as said process is performed before the ceramic mortar loses its elasticity. During the sinking, the adherence develops between the part (1) and the ceramic sanitary ware (2). In this manner, the firing process is achieved without falling off the part (1) from ceramic sanitary ware (2) surface during the kiln application/firing process for the ceramic sanitary ware (2), irrespective of the position of firing. On the other hand, in case the part (1) to be fixed on the surface of the ceramic sanitary ware is positioned on the ceramic sanitary ware (2) prior to the glazing process, care should be taken to ensure that no unglazed region remains on the inner surface of the hole positioned on the surface of the ceramic sanitary ware and between the part (1) to be fixed on the surface of the ceramic sanitary ware and the surface of the ceramic sanitary ware (2) as a result of the aforesaid masking step for the surface of the part (1).

In case the step of positioning the part (1), which is to be fixed on the surface of the ceramic sanitary ware, on the ceramic sanitary ware (2) is performed after the glazing process for the surface of the ceramic sanitary ware (2), there is no risk involved regarding any unglazed region remaining on the surface of the ceramic sanitary ware as said masking process is absent in this case. However, because, unlike the previous case, the part (1) to be fixed on the surface of the ceramic sanitary ware will not sink in the ceramic mortar and the process of adhesion of the part (1) onto the surface of the ceramic sanitary ware (2) will take place only by means of the glazing layer during the kiln application/firing process as mentioned above, care must be taken to ensure that the part (1) positioned on the surface of the ceramic sanitary ware is parallel to the ground plane to the maximum extent possible during the placement of the ceramic sanitary ware (2) for the firing process. Otherwise, the risk will form for the part (1) to slip and fall off the surface. However, since the glazing layer has been applied on the surface, the glazing will serve the function of an adhesive for the part and will partially secure the part on the surface.

The ceramic sanitary ware (2) on which the part (1) has been positioned is included within the scope of the invention. Said ceramic sanitary ware may be a toilet bowl or it may be any product not limited to those mentioned above, wherein it is possible to fix a part on the surface of the product also for the other ceramic sanitary ware via the same method.

Owing to the method developed within the scope of the invention, the necessity to adhere or secure via mechanical means a part, which is to be positioned on the ceramic sanitary ware in case the feature of a transparent surface and/or light transmittance is/are needed on the ceramic sanitary ware, on a ceramic sanitary ware has been eliminated and also a product enabling the hygienic use has been obtained. In the product obtained in this manner, the liquid or air permeability has been prevented to the region where the part to be fixed on the surface of the ceramic sanitary ware is positioned, the part has been enabled to be fixed on the ceramic sanitary ware in a stable manner and the accumulation of dirt has also been precluded in this region as the surface between the part and the ceramic sanitary ware is covered by the glazing layer.

The part to be fixed on the surface of the ceramic sanitary ware with the method developed within the scope of the invention may be a part featuring the light transmittance and/or a part featuring the ability to enable an image on the background to be seen by a user as well as a part that only needs to be stably fixed to the product and that enables any member positioned its rear section to be enclosed in a housing without necessarily bringing any special feature to the product or any other part having properties different than those mentioned above and being manufactured from a material that fits the special feature it is to bring to the product. Consequently, it will be possible to fix any part on the surface of a ceramic sanitary ware via the method according to the invention, without any limitation.

## Claims

1. A method for fixing a part (1) on to a surface of a ceramic sanitary ware (2), **characterized in that** it comprises the process steps of
• applying a glaze layer (5) and providing the part (1) to the surface of the ceramic sanitary ware and
• subjecting to kiln application or firing the ceramic sanitary ware (2) along with the part (1) and the glazing layer (5),
wherein the part (1) is fixed on the surface of the ceramic sanitary ware (2) by means of the glazing layer (5) that melts and crystallizes during the kiln application/firing; wherein the part (1) to be fixed on the surface of the ceramic sanitary ware is positioned in at least one hole or on at least one hole made on the surface of the ceramic sanitary ware (2), said hole on the surface of the ceramic sanitary ware (2) being a stepped hole (3b) containing at least one housing (4) in the form of a cavity in which the part (1) to be fixed on the surface of the ceramic sanitary ware is to be positioned.

2. Method according to claim 1, wherein the step of the providing the part (1) comprises a positioning of part (1) before an applying of the glaze layer (5).

3. Method according to claim 1, wherein the step of the providing the part (1) comprises an applying of the glaze layer (5) before a positioning of part (1).

4. Method according to Claim 1, **characterized in that** in the process of fixing the part (1) on the surface of the ceramic sanitary ware (2) by means of the glazing layer (5) that melts and crystallizes during the kiln application/firing,
• the glazing layer (5), upon melting and crystallizing during the kiln application/firing process, covers the surface of the ceramic sanitary ware (2), and at the same time, the portion (5a) of the glazing layer is formed during the firing process, which forms a transition/bond between the part (1) and the surface of the ceramic sanitary ware (2), and
• owing to the portion (5a) of the glazing layer that is formed during the firing process, the part (1) is fixed on the surface of the ceramic sanitary ware during the firing process so that no gaps remains between the part (1) positioned on the surface of the ceramic sanitary ware and the surface of the ceramic sanitary ware (2), and thus, the accumulation of dirt is prevented in this region.

5. Method according to Claim 1, **characterized in that** the part (1) to be fixed on the surface of the ceramic sanitary ware is positioned in the stepped hole (3b), on the housing (4) present within said hole, in such a way that it will entirely remain inside said hole.

6. Method according to Claim 2, **characterized in that** in case the part (1) to be fixed on the surface of the ceramic sanitary ware is positioned on the surface of the ceramic sanitary ware (2) prior to the glazing process for the ceramic sanitary ware, the surface of the part (1) is covered or masked while the glazing process in progress, in order to protect said surface from the glazing.

7. A method according to any one of the preceding claims **characterized in that** the part (1) to be fixed on the surface of the ceramic sanitary ware is a glass part.

8. A method according to any one of the preceding claims **characterized in that** the part (1) to be fixed on the surface of the ceramic sanitary ware is a ceramic or composite or synthetic crystal part.

9. A method according to any one of the preceding claims **characterized in that** said ceramic sanitary ware is a toilet bowl.

10. A method according to any one of the preceding claims **characterized in that** said ceramic sanitary ware is a washbasin or urinal or shower tray or bidet or closet.

11. A ceramic sanitary ware it is obtained via the method according to any one of
the preceding claims and
**characterized in that** it comprises
• a part (1) positioned on the surface thereof,
• at least one hole, on which or in which said part (1) is to be positioned, and
• a glazing layer (5) applied on the surface of the ceramic sanitary ware (2) before said ceramic sanitary ware is fired,
wherein said part (1) is a part (1) fixed on the surface of the ceramic sanitary ware (2) upon the melting and crystallization of the glazing layer (5) during the firing of the ceramic sanitary ware, wherein said hole is stepped hole (3b) and it contains at least one housing (4) in the form of a cavity in which the part (1) to be fixed on the surface of the ceramic sanitary ware will be positioned.

12. Ceramic sanitary ware (2) according to Claim 11, **characterized in that** the part (1) to be fixed on the surface of the ceramic sanitary ware, which is positioned in the stepped hole (3b), is positioned as seated in the corresponding housing (4) within the stepped hole (3b) in such a way that it will not extend beyond the hole surface.

13. A ceramic sanitary ware according to Claim 11, **characterized in that** the part (1) to be fixed on the surface of the ceramic sanitary ware is glass.

14. A ceramic sanitary ware according to Claim 11, **characterized in that** the part (1) to be fixed on the surface of the ceramic sanitary ware is a ceramic or composite or synthetic crystal part.

15. Ceramic sanitary ware according to Claim 11, **characterized in that** it is a toilet bowl, or a washbasin, or urinal, or shower tray, or bidet, or closet.

## Patentansprüche

1. Verfahren zum Befestigen eines Teiles (1) an einer Oberfläche einer Sanitärkeramik (2), **dadurch gekennzeichnet, dass** das Verfahren folgende Verfahrensschritte umfasst:
Aufbringen einer Glasurschicht (5) und Anbringen des Teiles (1) an der Oberfläche der Sanitärkeramik, und
Anwenden eines Brennofens oder eines Brennvorganges auf die Sanitärkeramik (2), das Teil (1) und die Glasurschicht (5); wobei:
das Teil (1) an der Oberfläche der Sanitärkeramik (2) befestigt ist mittels der Glasurschicht (5), die im Brennofen/beim Brennvorgang schmilzt und kristallisiert;
das Teil (1), das an der Oberfläche der Sanitärkeramik (2) befestigt werden soll, in mindestens einem Loch oder an mindestens einem Loch, das in der Oberfläche der Sanitärkeramik (2) ausgebildet ist, angebracht ist; und
das Loch in der Oberfläche der Sanitärkeramik (2) eine abgesetzte Öffnung (3b) ist, die mindestens ein Gehäuse (4) in Form einer Aussparung umfasst, in der das Teil (1), das an der Oberfläche der Sanitärkeramik befestigt werden soll, angebracht werden soll.

2. Verfahren nach Anspruch 1, wobei das Anbringen des Teiles (1) ein Ausrichten des Teiles (1) vor dem Aufbringen der Glasurschicht (5) umfasst.

3. Verfahren nach Anspruch 1, wobei das Anbringen des Teiles (1) das Aufbringen der Glasurschicht (5) vor einem Ausrichten des Teils (1) umfasst.

4. Verfahren nach Anspruch 1, wobei:
während eines Befestigens des Teiles (1) an der Oberfläche der Sanitärkeramik (2) mittels der Glasurschicht (5), die im Brennofen/beim Brennvorgang schmilzt und kristallisiert, die Glasurschicht (5) beim Schmelzen und Kristallisieren im Brennofen/beim Brennvorgang die Oberfläche der Sanitärkeramik (2) bedeckt, und gleichzeitig
während des Brennvorgangs ein Abschnitt (5a) der Glasurschicht gebildet wird, der einen Übergang/eine Verbindung zwischen dem Teil (1) und der Oberfläche der Sanitärkeramik (2) bildet, und
mittels des Abschnitts (5a) der Glasurschicht, der während des Brennvorgangs gebildet wird, das Teil (1) während des Brennvorgangs so auf der Oberfläche der Sanitärkeramik (2) befestigt wird, dass keine Lücken zwischen dem auf der Oberfläche der Sanitärkeramik (2) angebrachten Teil (1) und der Oberfläche der Sanitärkeramik (2) verbleiben, so dass die Ansammlung von Schmutz in diesem Bereich vermieden wird.

5. Verfahren nach Anspruch 1, wobei das Teil (1), das an der Oberfläche der Sanitärkeramik befestigt werden soll, so in der abgesetzten Öffnung (3b) und an dem Gehäuse (4), das sich in dem Loch befindet, angebracht wird, dass es vollständig in dem Loch verbleibt.

6. Verfahren nach Anspruch 2, wobei:
für den Fall, dass das Teil (1), das an der Oberfläche der Sanitärkeramik (2) befestigt werden soll, vor dem Aufbringen der Glasurschicht auf die Sanitärkeramik an der Oberfläche der Sanitärkeramik (2) angebracht wird, eine Oberfläche des Teils (1), ggf. mit einer Schablone, abgedeckt wird, während die Glasurschicht aufgebracht wird, um die Oberfläche vor der Glasurschicht zu beschirmen.

7. Verfahren nach einem der vorangehenden Ansprüche, wobei das Teil (1), das an der Oberfläche der Sanitärkeramik befestigt werden soll, ein Teil aus Glas ist.

8. Verfahren nach einem der vorangehenden Ansprüche, wobei das Teil (1), das an der Oberfläche der Sanitärkeramik befestigt werden soll, ein Teil aus Keramik, einem Verbundwerkstoff oder aus synthetischem Kristall ist.

9. Verfahren nach einem der vorangehenden Ansprüche, wobei die Sanitärkeramik eine Klosettschüssel ist.

10. Verfahren nach einem der vorhergehenden Ansprüche, wobei die Sanitärkeramik ein Waschbecken, ein Urinal, eine Duschwanne, ein Bidet oder ein Klosett ist.

11. Sanitärkeramik, hergestellt nach einem Verfahren nach einem der vorhergehenden Ansprüche, umfassend:
ein Teil (1), das an der Oberfläche der Sanitärkeramik angeordnet ist,
mindestens ein Loch, auf dem oder in dem das Teil (1) angebracht ist, und
eine Glasurschicht (5), aufgebracht auf die Oberfläche der Sanitärkeramik (2), bevor die Sanitärkeramik gebrannt wird,
wobei:
das Teil (1) ein Teil (1) ist, das durch das Schmelzen und die Kristallisation der Glasurschicht (5) während des Brennens der Sanitärkeramik (2) an der Oberfläche der Sanitärkeramik (2) befestigt wird, und
das Loch eine abgesetzte Öffnung (3b) ist und mindestens ein Gehäuse (4) in Form einer Aussparung umfasst, in der das Teil (1), das an der Oberfläche der Sanitärkeramik befestigt werden soll, angebracht wird.

12. Sanitärkeramik (2) nach Anspruch 11, wobei das Teil (1), das an der Oberfläche der Sanitärkeramik (2) befestigt werden soll und das in der abgesetzten Öffnung (3b) angebracht ist, so in dem Gehäuse (4) in der abgesetzten Öffnung (3b) platziert ist, dass es nicht über eine Oberfläche des Loch hervorsteht.

13. Sanitärkeramik nach Anspruch 11, wobei das Teil (1), das an der Oberfläche der Sanitärkeramik (2) befestigt werden soll, ein Teil aus Glas ist.

14. Sanitärkeramik (2) nach Anspruch 11, wobei das Teil (1), das an der Oberfläche der Sanitärkeramik befestigt werden soll, ein Teil aus Keramik, einem Verbundwerkstoff, oder aus synthetischem Kristall ist.

15. Sanitärkeramik nach Anspruch 11, wobei die Sanitärkeramik (2) eine Klosettschüssel, ein Waschbecken, ein Urinal, eine Duschwanne, ein Bidet oder ein Klosett ist.

## Revendications

1. Un procédé de fixation d'une pièce (1) sur une surface d'un appareil sanitaire en céramique (2), **caractérisé en ce qu'**il comprend les étapes de procédé consistant à
• appliquer une couche de glaçure (5) et disposer la pièce (1) sur la surface de l'appareil sanitaire en céramique et
• mettre au four ou chauffer l'appareil sanitaire en céramique (2) conjointement avec la pièce (1) et la couche de glaçure (5),
dans lequel la pièce (1) est fixée sur la surface de l'appareil sanitaire en céramique (2) au moyen de la couche de glaçure (5) qui fond et cristallise durant la mise au four/le chauffage ;
dans lequel la pièce (1) à fixer sur la surface de l'appareil sanitaire en céramique est positionnée dans au moins un trou ou sur au moins au moins un trou pratiqué sur la surface de l'appareil sanitaire en céramique (2), ledit trou sur la surface de l'appareil sanitaire en céramique (2) étant un trou étagé (3b) contenant au moins un logement (4) ayant la forme d'une cavité dans laquelle la pièce (1) à fixer sur la surface de l'appareil sanitaire en céramique doit être positionnée.

2. Procédé selon la revendication 1, dans lequel l'étape de disposition de la pièce (1) comprend un positionnement de la pièce partie (1) avant une application de la couche de glaçure (5).

3. Procédé selon la revendication 1, dans lequel l'étape de disposition de la pièce (1) comprend une application de la couche de glaçure (5) avant un positionnement de la pièce (1).

4. Procédé selon la revendication 1, **caractérisé en ce qu'**au cours de l'étape de fixation de la pièce (1) sur la surface de l'appareil sanitaire en céramique (2) au moyen de la couche de glaçure (5) qui fond et cristallise durant la mise au four/le chauffage,
• la couche de glaçure (5), lors de la fusion et de la cristallisation durant l'étape de mise au four/chauffage, couvre la surface de l'appareil sanitaire en céramique (2), et en même temps, la partie (5a) de la couche de glaçure est formée durant l'étape de chauffage, ce qui forme une transition/liaison entre la pièce (1) et la surface de l'appareil sanitaire en céramique (2), et
• en raison de la partie (5a) de la couche de glaçure qui est formée durant l'étape de chauffage, la partie (1) est fixée sur la surface de l'appareil sanitaire en céramique durant l'étape de chauffage de sorte qu'aucun espace ne reste entre la pièce (1) positionnée sur la surface de l'appareil sanitaire en céramique et la surface de l'appareil sanitaire en céramique (2), et ainsi, l'accumulation de saleté est empêchée dans cette zone.

5. Procédé selon la revendication 1, **caractérisé en ce que** la pièce (1) à fixer sur la surface de l'appareil sanitaire en céramique est positionnée dans le trou étagé (3b), sur le logement (4) présent à l'intérieur dudit trou, de telle manière qu'elle reste entièrement à l'intérieur dudit trou.

6. Procédé selon la revendication 2, **caractérisé en ce que** dans le cas où la pièce (1) à fixer sur la surface de l'appareil sanitaire en céramique est positionnée sur la surface de l'appareil sanitaire en céramique (2) avant l'étape d'application de la glaçure pour l'appareil sanitaire en céramique, la surface de la pièce (1) est couverte ou masquée pendant que l'étape d'application de la glaçure est en cours, afin de protéger ladite surface contre l'application de la glaçure.

7. Un procédé selon l'une quelconque des revendications précédentes, **caractérisé en ce que** la pièce (1) à fixer sur la surface de l'appareil sanitaire en céramique est une pièce en verre.

8. Un procédé selon l'une quelconque des revendications précédentes, **caractérisé en ce que** la pièce (1) à fixer sur la surface de l'appareil sanitaire en céramique est une pièce en céramique ou en composite ou en cristal synthétique.

9. Un procédé selon l'une quelconque des revendications précédentes, **caractérisé en ce que** ledit appareil sanitaire en céramique est une cuvette de toilettes.

10. Un procédé selon l'une quelconque des revendications précédentes, **caractérisé en ce que** ledit appareil sanitaire en céramique est un lavabo ou un bac de miction ou de douche ou un bidet ou une lunette.

11. Un appareil sanitaire en céramique obtenu par le procédé selon l'une quelconque des revendications précédentes et **caractérisé en ce qu'**il comprend :
• une pièce (1) positionnée sur sa surface,
• au moins un trou, sur lequel ou dans lequel ladite pièce (1) doit être positionnée, et
• une couche de glaçure (5) appliquée sur la surface de l'appareil sanitaire en céramique (2) avant que ledit appareil sanitaire en céramique ne soit chauffé,
dans lequel ladite pièce (1) est une pièce (1) fixée sur la surface de l'appareil sanitaire en céramique (2) lors de la fusion et de la cristallisation de la couche de glaçure (5) durant le chauffage de l'appareil sanitaire en céramique, dans lequel ledit trou est un trou étagé (3b) et il contient au moins un logement (4) sous la forme d'une cavité dans laquelle la pièce (1) à fixer sur la surface de l'appareil sanitaire en céramique va être positionnée.

12. Appareil sanitaire en céramique (2) selon la revendication 11, **caractérisé en ce que** la pièce (1) à fixer sur la surface de l'appareil sanitaire en céramique, qui est positionnée dans le trou étagé (3b), est positionnée en ayant comme assise le logement correspondant (4) à l'intérieur du trou étagé (3b) de telle sorte qu'elle ne s'étende pas au-delà de la surface du trou.

13. Un appareil sanitaire en céramique selon la revendication 11, **caractérisé en ce que** la pièce (1) à fixer sur la surface de l'appareil sanitaire en céramique est en verre.

14. Un appareil sanitaire en céramique selon la revendication 11, **caractérisé en ce que** la pièce (1) à fixer sur la surface de l'appareil sanitaire en céramique est une pièce en céramique ou en composite ou en cristal synthétique.

15. Appareil sanitaire en céramique selon la revendication 11, **caractérisé en ce qu'**il est une cuvette de toilette ou un lavabo ou un bac de miction ou de douche ou un bidet ou une lunette.
